# EUROPÄISCHE PATENTSCHRIFT

(11) **EP 2 587 403 B1**
(45) Veröffentlichungstag und Bekanntmachung des Hinweises auf die Patenterteilung: **20.05.2015**
(21) Anmeldenummer: 12185782.5
(22) Anmeldetag: 25.09.2012
(51) Int. Cl.: G06K 7/10

(54) **Gerätesystem**
Device system
Système d'appareil

(30) Priorität: 28.10.2011 DE 102011054929
(43) Veröffentlichungstag der Anmeldung: 01.05.2013
(73) Patentinhaber: Leuze electronic GmbH + Co KG, 73277 Owen/Teck (DE)
(72) Erfinder: Clauss, Armin, 72622 Nürtingen (DE); Dümmel, Thomas, 72584 Hülben (DE); Göhner, Matthias, 72581 Dettingen/Erms (DE)
(74) Vertreter: Ruckh, Rainer Gerhard

(56) Entgegenhaltungen:
- DE-A1- 19 733 689
- US-A- 5 767 500

## Beschreibung

Die Erfindung betrifft ein Gerätesystem.

Gerätesysteme der in Rede stehenden Art beziehen sich auf unterschiedliche Varianten eines optischen Sensors, insbesondere eines Barcodelesegeräts.

Derartige Varianten eines bestimmten Typs eines optischen Sensors ergeben sich insbesondere durch applikationsspezifische Ausbildungen eines solchen Sensors. Ein als Barcodelesegerät ausgebildeter optischer Sensor weist beispielsweise generell einen Sendelichtstrahlen emittierenden Sender, einen Empfangslichtstrahlen empfangenden Empfänger sowie eine Ablenkeinheit auf, mittels derer die Sendelichtstrahlen periodisch innerhalb eines flächigen Abtastbereichs geführt sind. Die Komponenten des Barcodelesegeräts sind in einem Gehäuse integriert. Je nach Applikation kann es sinnvoll sein, die Sendelichtstrahlen durch unterschiedliche Fenster in unterschiedlichen Seiten des Gehäuses zu führen. Weiterhin kann es sinnvoll sein, eine zweite Ablenkeinheit vorzusehen, um die Sendelichtstrahlen in einen räumlichen Abtastbereich zu führen. Für jede dieser Variante ist die Gehäuseform des Sensors spezifisch angepasst. Die Variantenvielfalt derartiger Barcodelesegeräte oder allgemein optischer Sensoren wird dadurch noch erhöht, dass unterschiedliche geräteseitige Anschlussmittel vorgesehen sein können, wie zum Beispiel unterschiedliche Stecker, Kabelverschraubungen und dergleichen. Jedes dieser geräteseitigen Anschlussmittel ist fester Bestandteil des optischen Sensors und insbesondere fest in dessen Gehäuse installiert. Somit ergeben sich für das Beispiel eines Barcodelesegeräts mit M unterschiedlichen Sensor- bzw. Gehäusevarianten und N unterschiedlichen geräteseitigen Anschlussmittel insgesamt M × N unterschiedliche Varianten ein und desselben Sensors. Eine derartig große Anzahl unterschiedlicher Varianten bedingt einen unerwünschte hohen fertigungstechnischen Aufwand bei der Herstellung derartiger Sensoren. So müssen für alle Varianten unterschiedliche Fertigungsunterlagen erstellt werden und auch entsprechend unterschiedliche Fertigungsabläufe vorgesehen werden. Weiterhin ist die Lagerhaltung einer derart großen Anzahl von Varianten eines Sensors sehr aufwändig.

Die DE 197 33 689 A1 betrifft ein Internet-Dateizugriffssystem, bei dem eine oder mehrere Internetdateien eine Dateiadresse besitzen. Diese Dateiadresse wird durch ein Kennzeichen grafisch dargestellt, welches mit einem optischen Leser identifiziert wird. Es ist eine Dateisammelvorrichtung vorgesehen, welche aus einem zentralen Hauptkörper und mehreren an diesen anschließbaren Datensammelmodulen besteht.

Die US 5 767 500 A betrifft einen optischen Codeleser, der einen Hauptkörper mit einem Prozessor und einen Optikkopf mit einem Scanner aufweist, der über eine Schnittstelle an den Hauptkörper angeschlossen werden kann. Die Konfiguration des Codelesers kann dadurch variiert werden, dass unterschiedliche Optikköpfe an den Hauptkörper angeschlossen werden können.

Der Erfindung liegt die Aufgabe zugrunde, ein Gerätesystem der eingangs genannten Art bereitzustellen, mittels dessen mit geringem Fertigungsaufwand eine große Anzahl verschiedener Ausbildungen eines optischen Sensors hergestellt werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Gerätesystem umfasst eine Anzahl von unterschiedlich ausgebildeten optischen Sensoren und eine Anzahl von unterschiedlich ausgebildeten Anschlussmodulen, wobei jeder optische Sensor dieselbe sensorseitige Schnittstelle und jedes Anschlussmodul dieselbe, zur sensorseitigen Schnittstelle korrespondierende modulseitige Schnittstelle sowie geräteseitige Anschlussmittel aufweist. Durch Anschluss einer modulseitigen Schnittstelle ist an eine sensorseitige Schnittstelle ein frei wählbares Anschlussmodul an einen frei wählbaren optischen Sensor anschließbar. Die so gebildete Einheit ist mit dem geräteseitigen Anschlussmittel an eine externe Einheit anschließbar.

Der Grundgedanke der Erfindung besteht somit darin, ein geräteseitiges Anschlussmittel derart auszubilden, den optischen Sensor, enthaltend die Sensorkomponenten zur Objektdetektion einerseits und das Anschlussmodul, enthaltend die Mittel zum Anschluss des optischen Sensors an externe Einheiten, als separate Einheiten auszubilden, wobei jedoch die modulseitige Schnittstelle des Anschlussmoduls und die sensorseitige Schnittstelle des optischen Sensors eine universelle Schnittstelle derart bilden, dass unterschiedlich ausgebildete Anschlussmodule, welche zum Anschluss an verschiedene externe Einheiten ausgebildet sind, an unterschiedlich ausgebildete optische Sensoren stets über dieselbe an der sensorseitigen Schnittstelle und modulseitigen Schnittstelle gebildete Schnittstelle verbunden werden können.

Damit kann die Variantenvielfalt und damit auch der Fertigungsaufwand signifikant reduziert werden. Umfasst beispielsweise das erfindungsgemäße Gerätesystem M unterschiedliche Anschlussmodule zum Anschluss an unterschiedliche externe Einheiten und N unterschiedliche Varianten von optischen Sensoren, so müssen fertigungstechnisch nur M+N unterschiedliche Geräte gefertigt werden, nämlich M verschiedene Anschlussmodule und N verschiedene optische Sensoren gefertigt werden. Damit lassen sich jedoch M × N verschiedene Gesamtgeräte, bestehend aus einem optischen Sensor und einem daran angeschlossenen Anschlussmodul realisieren, da mit der universellen Schnittstelle, bestehend aus der sensorseitigen Schnittstelle und der modulseitigen Schnittstelle jedes Anschlussmodul an jede Sensorvariante angeschlossen werden kann. Im Vergleich zu optischen Sensoren, bei denen die Anschlussmittel zum Anschluss an externe Einheiten fest implementiert sind, ergibt sich damit eine signifikante Reduzierung der Variantenvielfalt.

Dies soll an einem einfachen Zahlenbeispiel veranschaulicht werden. Existieren beispielsweise M = 10 unterschiedliche Anschlussmittel zum Anschluss an externe Einheiten und N = 15 unterschiedliche Sensorvarianten, so müssen bei einem aus dem Stand der Technik bekannten Sensortyp, in welchem die Anschlussmittel fest implementiert sind, insgesamt 150 unterschiedliche Gesamtgeräte, bestehend aus den optischen Sensoren und den darin implementierten Anschlussmitteln gefertigt werden. Bei dem erfindungsgemäßen Gerätesystem dagegen müssen nur 25 unterschiedliche Geräte gefertigt werden, nämlich 10 verschiedene Anschlussmodule und 15 unterschiedliche Varianten von optischen Sensoren. Die insgesamt 150 Gerätevarianten können dann dadurch realisiert werden, dass wahlweise ein Anschlussmodul und ein optischer Sensor über die universelle Schnittstelle verbunden wird.

Ein weiterer wesentlicher Vorteil des modularen Gerätesystems besteht darin, dass bei Ausfall eines Anschlussmoduls oder eines optischen Sensors diese Einheit für sich alleine ausgetauscht und durch eine entsprechende neue Einheit ersetzt werden kann.

Das erfindungsgemäße Gerätesystem kann optische Sensoren unterschiedlichster Ausprägungen umfassen. Besonders vorteilhaft umfasst das geräteseitige Anschlussmittel verschiedene Varianten eines Barcodelesegeräts.

Besonders vorteilhaft bilden die modulseitigen Schnittstellen eines Anschlussmoduls und die sensorseitigen Schnittstellen eines optischen Sensors eine Steckverbindung aus.

Diese Steckverbindung kann sehr einfach hergestellt und wieder gelöst werden.

Die Funktionalität der einzelnen Anschlussmodule kann vorteilhaft dadurch erhöht werden, dass in diesen eine Speichereinheit integriert ist.

Vorteilhaft kann diese Speichereinheit zum Abspeichern der Parameter des optischen Sensors verwendet werden. Muss bei einem Defekt eines optischen Sensors dieser gegen einen neuen optischen Sensor ausgetauscht werden, kann der neue optische Sensor aus dem Anschlussmodul den Parametersatz des alten optischen Sensors übernehmen und ist damit ohne Einlernvorgänge oder Einstellvorgänge sofort betriebsbereit.

Die Funktionalität der Anschlussmodule kann weiterhin dadurch erweitert sein, dass diese Busanschlüsse bilden, wobei je nach Konfiguration des Bussystems eine Busleitung durch das Anschlussmodul durchgeschleift ist oder das Anschlussmodul eine Terminierung eines Bussystems bildet.

Besonders vorteilhaft sind an dem Anschlussmodul Schalter zur Einstellung einer Netzwerkadresse vorgesehen.

Damit kann eine Bedienperson vor Ort auch im mechanischen Einstellvorgang die Netzwerkadresse des Anschlussmoduls in einem Bussystem vorgeben.

Mit den erfindungsgemäßen Anschlussmodulen können Anschlüsse an unterschiedlich ausgebildete externe Einheiten realisiert werden, wobei hierzu beispielsweise ein Anschlussmodul als geräteseitiges Anschlussmittel Steckverbinder oder Kabelverschraubungen aufweist.

Weiterhin ist ein Anschlussmodul über eine lösbare Kabelverbindung als geräteseitiges Anschlussmittel mit einer Anschlussbox verbunden.

Die Erfindung wird im Folgenden anhand der Zeichnungen erläutert. Es zeigen:
- Figur 1:: Schematische Darstellung eines Ausführungsbeispiels des erfindungsgemäßen Gerätesystems.
- Figur 2:: Darstellung der modulseitigen Schnittstelle eines Anschlussmoduls des Gerätesystems gemäß Figur 1.
- Figur 3:: Anschlussmodul gemäß den Figuren 1 und 2 mit einer ausgeschleiften Busleitung.

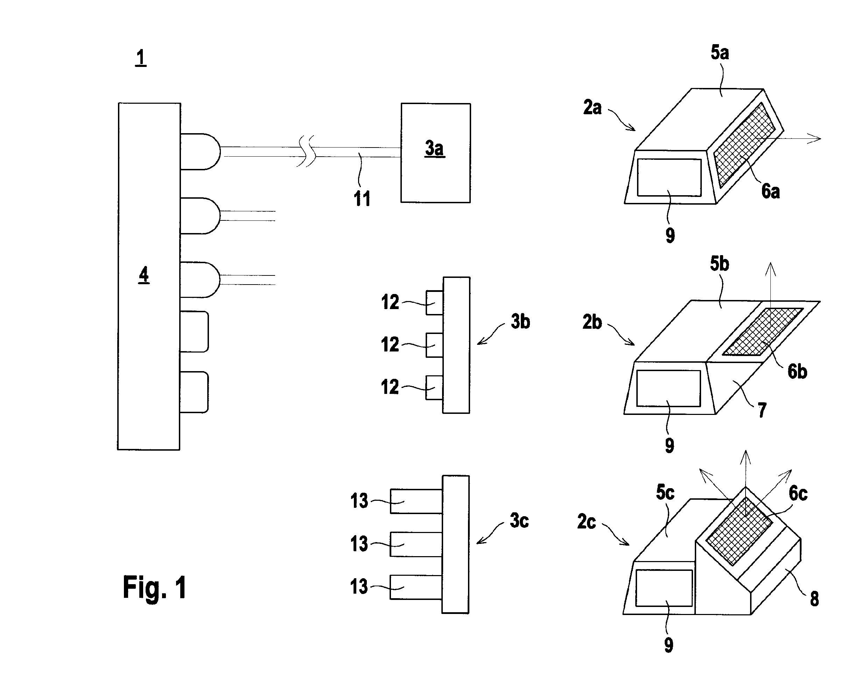

Figur 1 zeigt schematische Komponenten eines Gerätesystems 1, welches mehrere Varianten eines optischen Sensors umfasst, welcher im vorliegenden Fall als Barcodelesegerät 2a, 2b, 2c ausgebildet ist, sowie eine Anzahl von den Varianten des Barcodelesegeräts 2a, 2b, 2c zugeordneten Anschlussmodulen 3a, 3b, 3c. Weiterhin zeigt Figur 1 als Beispiel einer externen Einheit eine Anschlussbox 4.

Jedes Barcodelesegerät 2a, 2b, 2c weist in bekannter Weise Sensorkomponenten in Form eines Sendelichtstrahlen emittierenden Senders, eines Empfangslichtstrahlen empfangenden Empfängers und einer Ablenkeinheit mit einem Polygonspiegelrad auf, welche in Figur 1 nicht gesondert dargestellt sind und welche in einem Gehäuse 5a, 5b, 5c des Barcodelesegeräts 2a, 2b, 2c integriert sind. Mit dem Polygonspiegelrad werden die Sendelichtstrahlen periodisch entlang einer Abtastlinie abgelenkt. In dem von der Abtastlinie gebildeten Erfassungsbereich können Barcodes erfasst werden, wobei die dabei am Empfänger erfassten Empfangssignale in einer ebenfalls nicht dargestellten Auswerteeinheit ausgewertet werden.

Bei einer ersten Variante des Barcodelesegeräts 2a befindet sich auf einer Schmalseite des Gehäuses 5a ein Fenster 6a, durch welches die Sendelichtstrahlen und Empfangslichtstrahlen geführt werden. Die Strahlrichtung der Sendelichtstrahlen ist mit einem Pfeil veranschaulicht.

Bei einer zweiten Variante des Barcodelesegeräts 2b weist das Gehäuse 5b einen Aufsatz 7 auf, in welchem ein Fenster 6b derart angeordnet liegt, dass dieses in der Ebene der Frontwand des Gehäuses 5b liegt. Auch hier ist die Strahlrichtung der durch das Fenster 6b geführten Sendelichtstrahlen mit einem Pfeil veranschaulicht.

Bei einer dritten Variante des Barcodelesegeräts 2c ist anders als bei den ersten Varianten des Barcodelesegeräts 2a, 2b eine weitere, dem Polygonspiegelrad nachgeordnete Ablenkeinheit vorgesehen, mittels derer eine Ablenkung der Sendelichtstrahlen in einem räumlichen Überwachungsbereich erfolgt, das heißt es werden mehrere versetzte Abtastlinien erzeugt. In diesem Fall weist das Gehäuse 5c einen vergrößerten Aufsatz 8 mit einem schräg zur Frontwand des Gehäuses 5c orientierten Fenster 6c auf, durch welches die Sendelichtstrahlen und Empfangslichtstrahlen geführt sind. Die in unterschiedlichen Richtungen der aus dem Fenster 6c geführten Sendelichtstrahlen sind mit mehreren Pfeilen veranschaulicht.

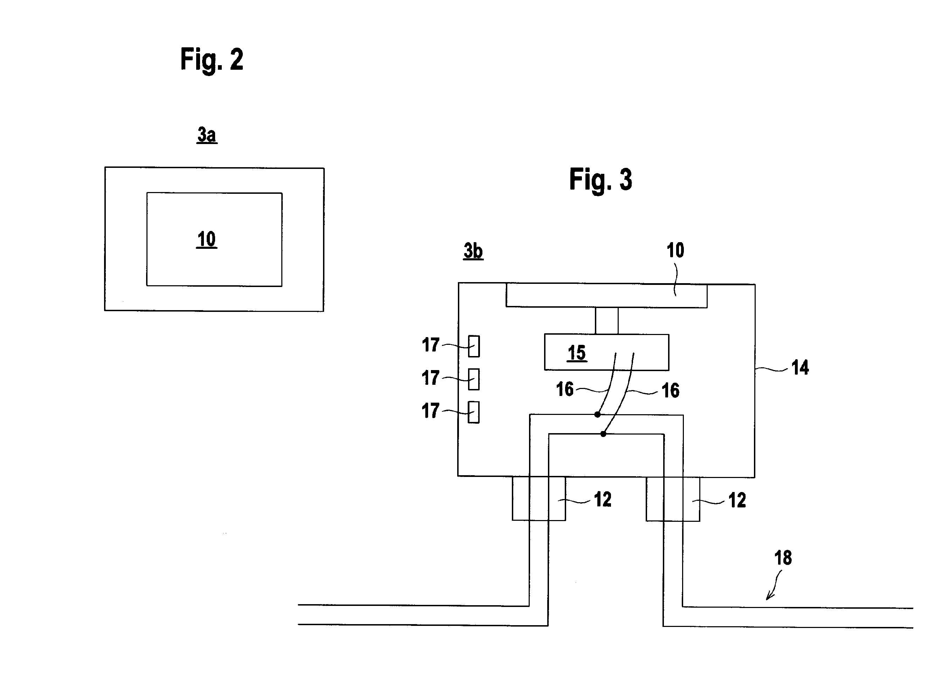

Alle Varianten des Barcodelesegeräts 2a, 2b, 2c weisen dieselbe sensorseitige Schnittstelle 9 auf, mittels derer wahlweise eines der Anschlussmodule 3a, 3b, 3c an diese Einheiten angeschlossen werden kann. Jedes Anschlussmodul 3a, 3b, 3c weist, wie in Figur 2 exemplarisch für das Anschlussmodul 3a exemplarisch dargestellt, dieselbe modulseitige Schnittstelle 10 auf, die eine zur sensorseitigen Schnittstelle 9 komplementäre Schnittstelleneinheit bildet. Alle sensorseitigen Schnittstellen 9 einerseits und alle modulseitigen Schnittstellen 10 andererseits sind jeweils hinsichtlich ihrer mechanischen und elektrischen Schnittstellenparameter identisch ausgebildet. Im vorliegenden Fall bilden die sensorseitigen Schnittstellen 9 und die modulseitigen Schnittstellen 10 eine Steckverbindung aus.

Durch die so ausgebildete universelle Schnittstelle bestehend aus der sensorseitigen Schnittstelle 9 und der modulseitigen Schnittstelle 10 kann jedes Anschlussmodul 3a, 3b, 3c an jedes Barcodelesegerät 2a, 2b, 2c angeschlossen werden. Mit den verschiedenen Anschlussmodulen 3a, 3b, 3c können so Anschlüsse der Barcodelesegeräte 2a, 2b, 2c an unterschiedliche externe Einheiten realisiert werden.

Zum Anschluss an verschiedene externe Einheiten weisen die einzelnen Anschlussmodule 3a, 3b, 3c unterschiedliche geräteseitige Anschlussmittel auf.

Das erste Anschlussmodul 3a weist als geräteseitiges Anschlussmittel eine lösbare Kabelverbindung 11 zum Anschluss an eine Anschlussbox 4 auf. Das zweite Anschlussmodul 3b weist als geräteseitiges Anschlussmittel einen verkonfektionierten Standardsteckverbinder 12 auf, der im vorliegen Fall als M12-Steckverbinder ausgebildet ist. Das dritte Anschlussmittel 3c weist als geräteseitiges Anschlussmittel Kabelverschraubungen 13 auf, an welchen Kabel mittels Federklemmen angeschlossen werden können.

Figur 3 zeigt schematisch den Aufbau des Anschlussmoduls 3b, welches als geräteseitiges Anschlussmittel Standardsteckverbinder 12 aufweist. Wie bei jedem Anschlussmodul 3a, 3b, 3c sind auch hier die Komponenten des Anschlussmoduls in einem Modulgehäuse 14 integriert. Als wesentliche Komponente des Anschlussmoduls 3b ist eine Speichereinheit 15 vorgesehen, die im vorliegenden Fall als EEPROM ausgebildet ist. Zum elektrischen Anschluss der modulseitigen Schnittstelle 10 sind Leitungen 16 vorgesehen. Die Speichereinheit 15 ist mit einem Prozessor im Barcodelesegerät 2a, 2b, 2c vorhanden, wenn an dieses das Anschlussmodul 3a, 3b, 3c angeschlossen ist.

In der Speichereinheit 15 können insbesondere die Parameter des angeschlossenen Barcodelesegeräts 2a, 2b, 2c gespeichert werden. Bei Bedarf, insbesondere bei Austausch eines defekten Barcodelesegeräts 2a, 2b, 2c gegen einen neuen, können die Parameter aus der Speichereinheit 15 über die modulseitige Schnittstelle 10, welche an die sensorseitige Schnittstelle 9 des Barcodelesegeräts 2a, 2b, 2c angeschlossen ist, ausgelesen werden.

Das Anschlussmodul 3a, 3b, 3c bildet weiterhin ein Anschlussmittel zum Anschluss eines Barcodelesegeräts 2a, 2b, 2c an ein Bussystem, das beispielsweise von einem Profilbussystem gebildet ist. Die Netzwerkadresse des Anschlussmoduls 3a, 3b, 3c im Bussystem kann über Schalter 17 vorgegeben werden. Die Schalter 17 können als Dreh- oder Schiebeschalter ausgebildet sein. Die Netzwerkadresse wird in der Speichereinheit 15 des Anschlussmoduls 3a, 3c, 3c gespeichert. Da das Anschlussmodul 3a, 3b, 3c den vollständigen Busanschluss übernimmt, bleibt das Bussystem auch dann funktionsfähig, wenn kein Barcodelesegerät 2a, 2b, 2c an das Anschlussmodul 3a, 3b, 3c angeschlossen ist.

Bei der in Figur 3 dargestellten Konfiguration ist das Anschlussmodul 3b derart an das Bussystem angeschlossen, dass dessen, im vorliegenden Fall zweiadrige, Busleitungen 18 über die Standardsteckverbinder 12 durch das Anschlussmodul 3a, 3b, 3c durchgeschleift sind. Alternativ kann das Anschlussmodul 3a, 3b, 3c auch eine Busterminierung ausbilden. Die Busleitungen 18 sind über die Leitungen 16 an die modulseitige Schnittstelle 10 angeschlossen.

### Bezugszeichenliste

- (1): Gerätesystem
- (2a): Barcodelesegerät
- (2b): Barcodelesegerät
- (2c): Barcodelesegerät
- (3a): Anschlussmodul
- (3b): Anschlussmodul
- (3c): Anschlussmodul
- (4): Anschlussbox
- (5a): Gehäuse
- (5b): Gehäuse
- (5c): Gehäuse
- (6a): Fenster
- (6b): Fenster
- (6c): Fenster
- (7): Aufsatz
- (8): Aufsatz
- (9): sensorseitige Schnittstelle
- (10): modulseitige Schnittstelle
- (11): Kabelverbindung
- (12): Standardsteckverbinder
- (13): Kabelverschraubung
- (14): Modulgehäuse
- (15): Speichereinheit
- (16): Leitungen
- (17): Schalter
- (18): Busleitung

## Patentansprüche

1. Gerätesystem (1), umfassend eine Anzahl von unterschiedlich ausgebildeten optischen Sensoren und eine Anzahl von unterschiedlich ausgebildeten Anschlussmodulen (3a, 3b, 3c), wobei jeder optische Sensor dieselbe sensorseitige Schnittstelle (9) und jedes Anschlussmodul (3a, 3b, 3c) dieselbe, zur sensorseitigen Schnittstelle (9) korrespondierende modulseitige Schnittstelle (10) sowie geräteseitige Anschlussmittel aufweist, so dass durch Anschluss einer modulseitigen Schnittstelle (10) an eine sensorseitige Schnittstelle (9) ein frei wählbares Anschlussmodul (3a, 3b, 3c) an einen frei wählbaren optischen Sensor anschließbar ist und die so gebildete Einheit mit dem geräteseitigen Anschlussmittel an eine externe Einheit anschließbar ist.

2. Gerätesystem nach Anspruch 1, **dadurch gekennzeichnet, dass** die optischen Sensoren verschiedene Varianten eines Barcodelesegeräts (2a) sind.

3. Gerätesystem nach einem der Ansprüche 1 oder 2, **dadurch gekennzeichnet, dass** die modulseitige Schnittstelle (10) eines Anschlussmoduls (3a) lösbare und die sensorseitige Schnittstelle (9) eines optischen Sensors eine Steckverbindung ausbilden.

4. Gerätesystem nach einem der Ansprüche 1 bis 3, **dadurch gekennzeichnet, dass** in jedem Anschlussmodul (3a, 3b, 3c) eine Speichereinheit (15) integriert ist.

5. Gerätesystem nach Anspruch 4, **dadurch gekennzeichnet, dass** in der Speichereinheit (15) des Anschlussmoduls (3a, 3b, 3c) Parameter des angeschlossenen optischen Sensors gespeichert sind.

6. Gerätesystem nach einem der Ansprüche 1 bis 5, **dadurch gekennzeichnet, dass** das Anschlussmodul (3a, 3b, 3c) einen Busanschluss bildet.

7. Gerätesystem nach Anspruch 6, **dadurch gekennzeichnet, dass** eine Busleitung (18) durch das Anschlussmodul (3a, 3b, 3c) durchgeschleift ist.

8. Gerätesystem nach Anspruch 6, **dadurch gekennzeichnet, dass** das Anschlussmodul (3a, 3b, 3c) eine Terminierung eines Bussystems bildet.

9. Gerätesystem nach Anspruch 7, **dadurch gekennzeichnet, dass** an dem Anschlussmodul (3a, 3b, 3c) Schalter (17) zur Einstellung einer Netzwerkadresse vorgesehen sind.

10. Gerätesystem nach einem der Ansprüche 1 bis 9, **dadurch gekennzeichnet, dass** ein Anschlussmodul (3a, 3b, 3c) als geräteseitiges Anschlussmittel Steckverbinder oder Kabelverschraubungen (13) aufweist.

11. Gerätesystem nach einem der Ansprüche 1 bis 9, **dadurch gekennzeichnet, dass** ein Anschlussmodul (3a, 3b, 3c) über eine lösbare Kabelverbindung (11) als geräteseitiges Anschlussmittel mit einer Anschlussbox (4) verbunden ist.

## Claims

1. Apparatus system (1), comprising a plurality of differently constructed optical sensor and a plurality of differently constructed connection modules (3a, 3b, 3c), wherein each optical sensor has the same interface (9) at the sensor side and each connection module (3a, 3g, 3c) has the same interface (10), which corresponds with the interface (9) at the sensor side, at the module side as well as connection means at the apparatus side, so that through connection of an interface (10) at the module side with an interface (9) at the sensor side a freely selectable connection module (3a, 3b, 3c) is connectible with the freely selectable optical sensor and the thus-formed unit is connectible with an external unit by the connection means at the apparatus side.

2. Apparatus system according to claim 1, **characterised in that** the optical sensors are different variants of a barcode reader (2a).

3. Apparatus system according to one of claims 1 and 2, **characterised in that** the module-side interface (10) of a connection module (3a) and the sensor-side interface (9) of an optical sensor form a releasable plug connection.

4. Apparatus system according to any one of claims 1 to 3, **characterised in that** a memory unit (15) is integrated in each connection module (3a, 3b, 3c).

5. Apparatus system according to claim 4, **characterised in that** parameters of the connected optical sensor are stored in the memory unit (15) of the connection module (3a, 3b, 3c).

6. Apparatus system according to any one of claims 1 to 5, **characterised in that** the connection module (3a, 3b, 3c) forms a bus connection.

7. Apparatus system according to claim 6, **characterised in that** a bus line (18) is looped through by the connection module (3a, 3b, 3c).

8. Apparatus system according to claim 6, **characterised in that** the connection module (3a, 3b, 3c) forms a terminus of a bus system.

9. Apparatus system according to claim 7, **characterised in that** switches (17) for setting a network address are provided at the connection module (3a, 3b, 3c).

10. Apparatus system according to any one of claims 1 to 9, **characterised in that** a connection module (3a, 3b, 3c) comprises plug connectors or cable screw connectors (13) as connecting means at the apparatus side.

11. Apparatus system according to any one of claims 1 to 9, **characterised in that** a connection module (3a, 3b, 3c) is connected with a connection box (4) by way of a releasable cable connection (11) as connection means at the apparatus side.

## Revendications

1. Système (1) d'appareils, comprenant un certain nombre de capteurs optiques de réalisations différentes et un certain nombre de modules de raccordement (3a, 3b, 3c) de réalisations différentes, chaque capteur optique présentant le même interface (9) situé côté capteur, et chaque module de raccordement (3a, 3b, 3c) présentant le même interface (10) situé côté module et concordant avec ledit interface (9) situé côté capteur, et étant pourvu de moyens de connexion situés côté appareils, de sorte que le raccordement d'un interface (10) situé côté module, à un interface (9) situé côté capteur, permet de connecter un module de raccordement (3a, 3b, 3c), librement sélectionnable, à un capteur optique pouvant être librement sélectionné, et que l'ensemble unitaire ainsi formé peut être raccordé à un ensemble unitaire extérieur par le moyen de connexion situé côté appareil.

2. Système d'appareils, selon la revendication 1, **caractérisé par le fait que** les capteurs optiques sont différentes variantes d'un appareil (2a) de lecture de codes à barres.

3. Système d'appareils, selon l'une des revendications 1 ou 2, **caractérisé par le fait que** l'interface (10) d'un module de raccordement (3a), situé côté module, et l'interface (9) d'un capteur optique, situé côté capteur, forment une liaison par enfichage de type libérable.

4. Système d'appareils, selon l'une des revendications 1 à 3, **caractérisé par le fait qu'**une unité de mémorisation (15) est intégrée dans chaque module de raccordement (3a, 3b, 3c).

5. Système d'appareils, selon la revendication 4, **caractérisé par le fait que** des paramètres du capteur optique connecté sont mémorisés dans l'unité de mémorisation (15) du module de raccordement (3a, 3b, 3c).

6. Système d'appareils, selon l'une des revendications 1 à 5, **caractérisé par le fait que** le module de raccordement (3a, 3b, 3c) forme un connecteur de bus.

7. Système d'appareils, selon la revendication 6, **caractérisé par le fait qu'**une ligne de bus (18) traverse le module de raccordement (3a, 3b, 3c) en décrivant une boucle.

8. Système d'appareils, selon la revendication 6, **caractérisé par le fait que** le module de raccordement (3a, 3b, 3c) forme une terminaison d'un système de bus.

9. Système d'appareils, selon la revendication 7, **caractérisé par le fait que** des commutateurs (17) sont prévus, sur le module de raccordement (3a, 3b, 3c), pour le réglage d'une adresse de réseau.

10. Système d'appareils, selon l'une des revendications 1 à 9, **caractérisé par le fait qu'**un module de raccordement (3a, 3b, 3c) présente des connecteurs enfichables ou des câblages vissés (13) en tant que moyen de connexion situé côté appareil.

11. Système d'appareils, selon l'une des revendications 1 à 9, **caractérisé par le fait qu'**un module de raccordement (3a, 3b, 3c) est relié à un boîtier de connexion (4) par l'intermédiaire d'une jonction câblée libérable (11), en tant que moyen de connexion situé côté appareil.
